Europäisches Patentamt

European Patent Office

Office européen des brevets

(19)

(11) Veröffentlichungsnummer: **0 233 138**
**A1**

(12) # EUROPÄISCHE PATENTANMELDUNG

(21) Anmeldenummer: **87730010.3**

(22) Anmeldetag: **31.01.87**

(51) Int. Cl.⁴: **G 11 B 3/68**, G 11 B 23/00

(30) Priorität: **11.02.86 DE 3604237**

(43) Veröffentlichungstag der Anmeldung: **19.08.87**
**Patentblatt 87/34**

(84) Benannte Vertragsstaaten: **AT BE CH DE ES FR GB GR
IT LI NL SE**

(71) Anmelder: **TELDEC Schallplatten GmbH, Heussweg 25,
D-2000 Hamburg 20 (DE)**

(72) Erfinder: **Redlich, Horst, Ing., Plassstrasse 3a,
D-1000 Berlin 37 (DE)**
Erfinder: **Joschko, Günter, Dipl.-Phys., Silvesterweg 7,
D-1000 Berlin 28 (DE)**

(74) Vertreter: **Meyer, Ludgerus A., Patentanwälte Holländer
& Meyer Jungfernstieg 38, D-2000 Hamburg 36 (DE)**

(54) **Verfahren zur Herstellung einer bespielten plattenförmigen Matrize.**

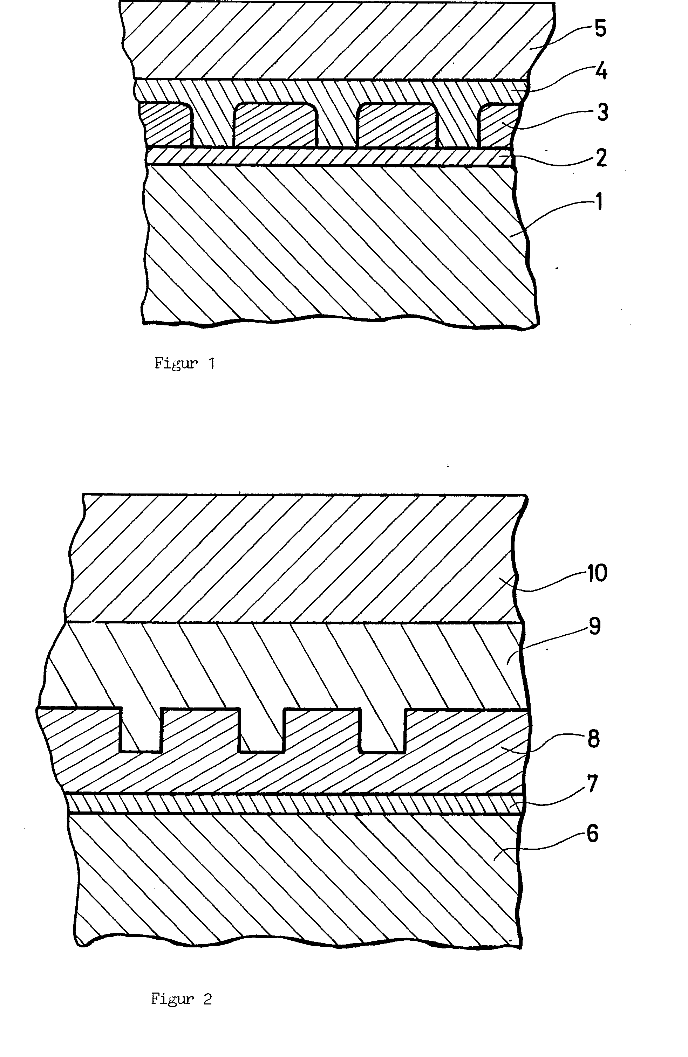

(57) Es wird ein Verfahren zur Herstellung einer bespielten plattenförmigen Matrize angegeben, bei dem das Informationssignal auf einen metallischen Aufzeichnungsträger aufgezeichnet wird. Erfindungsgemäß wird die aus unedlem Metall bestehende Informationsträgerschicht (8) zunächst auf einen Glasträger (6) aufgedampft, und dann wird das Informationssignal mit Hilfe eines Schneid- oder Prägewerkzeuges auf der Oberfläche der Informationsschicht (8) aufgezeichnet. Daran anschließend wird eine metallische Zwischenschicht (9) aus edlem Metall aufgalvanisiert, auf die dann eine weitere Trägerschicht (10), insbesondere aus Nickel, aufgalvanisiert wird. Nach mechanischem Abtrennen des Glasträgers (6) kann dann die Informationsträgerschicht (8) einfach durch ein die Zwischenschicht (9) nicht angreifendes chemisches Medium entfernt werden. Das erfindungsgemäße Verfahren eignet sich insbesondere zur Herstellung von Matrizen für die digitale Tonaufzeichnung nach dem CD-Verfahren (Fig. 2).

0233138

Hamburg, den 10.02.1986

Anmelder: TELDEC SCHALLPLATTEN GMBH
Heußweg 25, 2000 Hamburg 20

Verfahren zur Herstellung einer bespielten plattenförmigen Matrize

Die Erfindung betrifft ein Verfahren zur Herstellung einer bespielten plattenförmigen Matrize nach dem Oberbegriff des Anspruches 1. Die Erfindung betrifft weiterhin eine bespielte plattenförmige Matrize sowie einen unbespielten Informationsträger nach den Oberbegriffen der Ansprüche 10 und 11.

In der analogen Schallplattentechnik ist es bereits bekannt, Informationssignale in metallische Aufzeichnungsträger einzuschneiden und von diesem Träger unmittelbar Matrizen abzuziehen. Dieses, als sogenanntes Direktmetall-Masteringverfahren bekannte, von der Anmelderin entwickelte, Verfahren (DMM - Direct Metal Mastering) zeichnet sich durch hohe Formtreue bei der galvanischen Duplizierung sowie Wegfall von mehreren Zwischenstufen zur Herstellung einer Schallplatte aus.

Einer analogen Schallaufzeichnung haften jedoch grundsätzliche Probleme an, die zwar durch die Weiterentwicklung der Technik zum überwiegenden Teil beherrschbar wurden, jedoch hat sich in den letzten Jahren auch die digitale Aufzeichnung eines Informationssignals mit anschließender optischer Auslesung mit Hilfe eines Lasers einen beträchtlichen Marktanteil erobert. Das digitale Signal wird dabei üblicherweise durch komplizierte optische und chemische Prozesse auf einen Aufzeichnungsträger aufgezeichnet. Die davon vervielfältigten sogenannten CD-Platten (Compakt-Disc) zeichnen sich durch gute akustische Eigenschaften sowie durch die Ermöglichung einer berührungsfreien Abtastung mit Hilfe eines Lasers aus.

Für den Endverbraucher ist die Handhabung einer CD-Platte einfacher als die einer herkömmlichen Schallplatte, da die Oberfläche einer CD-Platte relativ unempfindlich ist. Das berührungsfreie Abtasten mit Hilfe eines Lasers ermöglicht weitere Vorteile.

Allerdings ist die Herstellung einer CD-Platte ungleich komplizierter als die Herstellung einer analogen Schallplatte. Die beim Stand der Technik verwendeten Einrichtungen verlangen die Verwendung von "Reinsträumen", damit nicht die Gefahr besteht, daß Staubpartikel den Herstellungsprozeß einer Platte in unzumutbarer Weise beeinträchtigen. Die Herstellung des sogenannten CD-Masters erfolgt überlicherweise in folgenden Schritten: Eine hochglanzpolierte Glasplatte wird zunächst einer visuellen Kontrolle unterzogen, dann gereinigt und mit einer Haftschicht versehen. Auf diese Haftschicht wird eine Fotoresistschicht aufgetragen, deren Dicke von $0,1\ \mu$ genau der Tiefe der Signalspur auf der fertigen CD-Platte entspricht, um ein Auslesen mit Hilfe eines Laserstrahls zu ermöglichen. Anschließend erfolgt eine erneute Überprüfung sowie Haltbarmachung der beschichteten Glasplatte. Darauf erfolgt die Aufzeichnung des Informationssignals mit Hilfe eines Laserstrahls, so daß im nachfolgenden Entwicklerprozeß die Stellen der Belichtung ausgewaschen werden können. Der Vorgang des Auswaschens wird durch einen Laserstrahl kontrolliert solange fortgesetzt, bis die gewünschte Pitstruktur erreicht ist. Nachfolgend wird die entwickelte Fotoresistschicht mit einer dünnen Silberschicht versehen, um die Aufgalvanisierung eines Trägermaterials zu ermöglichen. Nach
der Aufgalvanisierung kann der Glasträger entfernt werden, so
daß nach weiterem Entfernen der nichtbelichteten Fotoresistschicht die endgültige Matrize (Vater) vorliegt, die zur Weiterverarbeitung in nachfolgenden Stufen in herkömmlicher
Weise eine Vervielfältigung ermöglicht.

Die Vielzahl der Verfahrensschritte und die Kompliziertheit
der Einrichtungen zur Kontrolle der gewünschten Signalform
bedingen ein kostspieliges Herstellungsverfahren, das empfindlich auf Störungen, Staubpartikel in der Atmosphäre sowie ungenaue Verfahrensparameter reagiert.

Der Erfindung liegt die Aufgabe zugrunde, ein Verfahren anzugeben, das die Herstellung von Matrizen, insbesondere für die
digitale Schallplattenaufzeichnung, die für die Laserauslesung
geeignet ist, wesentlich vereinfacht, mehrere Zwischenstufen
der Herstellung nach dem Stand der Technik überflüssig macht
und insgesamt eine verbesserte Qualität der Aufzeichnung ermöglicht. Eine weitere Aufgabe besteht darin, bespielte
Matrizen und unbespielte Informationsträger anzugeben, die
unempfindlich und lagerfähig sind und gute Aufzeichnungseigenschaften aufweisen.

Diese Aufgaben werden durch die in den unabhängigen Ansprüchen
angegebene Erfindung gelöst. Vorteilhafte Weiterbildungen der
Erfindung sind in Unteransprüchen angegeben.

Mit Hilfe der Erfindung ist es möglich, ein Verfahren für die
Matrizierung einer digitalen Schallaufzeichnung anzugeben, das
ohne Verwendung eines Laserstrahls für die Aufzeichnung und
ohne Fotoresistlacktechnik auskommt. Das unmittelbar in eine
Aufzeichnungsschicht eingeprägte oder eingeschnittene Informationssignal kann galvanisch abgeformt und nach Aufbringung
eines Trägers weiterverarbeitet und vervielfältigt werden.

Der Aufbau des durch das angegebene Verfahren entstehenden
Sandwiches besteht nur aus metallischen Schichten. Diese gestatten eine wesentlich bessere Formtreue und Abformung als
es bei der Verwendung von Lackschichten oder Fotoresistschichten möglich ist.

Nach der Erfindung wird auf einen Glasträger, vorzugsweise
nach Aufbringen einer Trennschicht aus Zinnbronze, eine Informationsträgerschicht aus vorzugsweise Kupfer aufgedampft.
Das Informationssignal wird dann unmittelbar auf dieser Informationsträgerschicht aufgezeichnet. Dann wird auf diese
Informationsträgerschicht galvanisch eine weitere Metallschicht - vorzugsweise Gold - und darauf ein Trägermaterial,
das vorzugsweise aus Nickel besteht, aufgebracht. Der Glasträger kann dann zur erneuten Verwendung leicht mechanisch
von dem Sandwich abgelöst werden.

Der abgelöste Sandwich kann zwar noch nicht unmittelbar zur
Duplizierung verwendet werden, sondern bildet eine Zwischenstufe dazu. Diese Zwischenstufe ist jedoch besonders zur
Lagerung und zum Transport geeignet, da sie keinerlei Zugang
zum Informationssignal der Informationsträgerschicht bietet,
denn das die Information enthaltene Gebiet ist beidseitig in
Metallschichten eingebettet.

Da die Informationsträgerschicht vorzugsweise aus Kupfer besteht, auf die eine Zwischenschicht aus Edelmetall, vorzugsweise Gold oder Platin, aufgebracht ist, kann die Aufzeichnungsschicht in einem einfachen Eisen-III-Chloridbad entfernt
werden, ohne daß die Edelmetallschicht angegriffen wird. Wegen
der unmittelbaren galvanischen Abformung auf der Informationsträgerschicht ist die Edelmetallschicht eine getreue Abbildung
der aufgezeichneten Signalstruktur. Von dieser Vatermatrize
können dann Abzüge angefertigt werden (Muttermatrizen bzw.
Preßmatrizen). Die Vatermatrize ist aber auch direkt als Preßmatrize verwendbar.

Die Erfindung wird nachstehend anhand eines Ausführungsbeispiels näher erläutert.

Fig. 1    zeigt die Darstellung einer Matrize nach dem Stand
          der Technik im Querschnitt,
Fig. 2    eine Darstellung der erfindungsgemäßen Matrize im
          Querschnitt.

Der Schichtenaufbau einer Matrize nach dem Stand der Technik
ergibt sich aus Fig. 1 (nicht maßstabsgerecht). Auf einen
hochpolierten Glasträger 1 wird zunächst eine Haftschicht 2
aufgetragen, auf die eine Fotoresistschicht 3 folgt. Die
Fotoresistschicht ist in einer Stärke von 0,1µm aufgebracht.
In diese Fotoresistschicht wird das Informationssignal mit
Hilfe eines Laserstrahls einbelichtet, so daß sich an den
Stellen der Belichtung eine Strukturänderung ergibt, die im
nachfolgenden Entwicklungsprozeß ausgewaschen werden kann.
Nach dem Entfernen der Fotoresistschicht an den belichteten
Stellen muß, bevor wegen der fehlenden Leitfähigkeit der
Fotoresistschicht der Nickelträger aufgebracht werden kann,
eine Silberschicht 4 aufgebracht werden, die für das galvanische Anwachsen der Nickelschicht 5 die notwendige Leitfähigkeit der Oberfläche herstellt.

Danach kann der Glasträger von der Fotoresistschicht abgelöst
werden, so daß die Reste der Fotoresistschicht von dem Glasträger zusammen mit der Adhesive-Schicht bzw. von der Silberschicht 4 durch geeignete Lösungsmittel entfernt werden. Die
Signalaufzeichnung liegt nunmehr in erhabener Form als Negativ
vor und kann in nachfolgenden Galvanisierstufen vervielfältigt
werden.

Die Aufgabe der Haftschicht 2 liegt im wesentlichen darin,
einerseits der Fotoresistschicht einen besseren Haftgrund zum
Glas zu geben, um nicht durch das spätere Aufbringen einer Nickelschicht und dadurch verursachter Spannungen ein Ablösen
der Fotoresistschicht zu verursachen, andererseits bei der
Aufbringung der Silberschicht 4 das Durchschlagen auf die
Glasoberfläche zu verhindern, da andernfalls die Silberschicht an der Glasoberfläche festhaften würde.

Auf diesem Wege hergestellte Matrizen sind relativ fehleranfällig, so daß ein hoher Ausschuß auftritt.

Fig. 2 zeigt in nicht maßstabsgerechter Querschnittsdarstellung einen Schnitt durch eine erfindungsgemäße Matrize. Auf
einen Glasträger 6 der Dicke 6 - 8 mm wird zunächst eine
dünne Zinnbronze-Schicht der Dicke von etwa 20 nm im Hochvakuum aufgedampft. Darauf wird eine Reinkupferschicht im
Hochvakuum aufgedampft mit der Dicke von etwa 100 - 300 nm.
Das derart aufgebrachte Kupfer ist ausreichend duktil, um
ein Einschneiden bzw. Einprägen eines Informationssignals
zu ermöglichen.

Ein derartig unbespielter Informationsträger kann nun in
eine Aufzeichnungseinrichtung eingespannt werden. Das Informationssignal wird dann mit Hilfe eines Diamantwerkzeuges
eingeprägt oder eingeschnitten. In der DE-P 35 27 606 sind
Verfahren und Einrichtungen zur Aufzeichnung eines Informationssignales angegeben, die zum Einprägen eines Signals in
einen erfindungsgemäßen Informationsträger geeignet sind.

Nach dem Aufzeichnen des Informationssignals erfolgt das
galvanische Aufbringen vorzugsweise einer Goldschicht mit einer
Dicke von etwa 5 µm. Die Goldschicht 9 ebnet die eingeschnittenen Informations-Pits vollkommen ein. In diesem Stadium ist
bereits ein völliger Schutz der Aufzeichnung erreicht. Daran
anschließend kann jetzt die Trägerschicht 10 aus Nickel galvanisch aufgebracht werden. Die Nickelschicht einer Dicke von
0,2 mm dient als Trägermaterial der aufgezeichneten Information.

In diesem Zustand kann der Sandwich über lange Zeit gelagert
werden, es kann aber auch zunächst die Glasplatte für eine
weitere Verwendung entlang der Zinnbronzeschicht 7 abgezogen
werden. Die Zinnbronzeschicht 7 ermöglicht eine leichte
mechanische Trennbarkeit des Sandwich von der Glasplatte,
andererseits gewährt sie ausreichende Haftung der Informationsträgerschicht an der Glasplatte. Vorzugsweise wird
der Sandwich in diesem Zwischenstadium (ohne Glasträger)
gelagert oder transportiert. Eine Beschädigung der Oberfläche
der Aufzeichnungsschicht ist hierbei nicht möglich.

Sobald die Matrize zur Weiterverarbeitung gebraucht wird,
kann in einem einfachen Eisen-III-Chloridbad die zum Einschneiden oder Einprägen der Information verwendete Kupferschicht abgeätzt werden. Zur besseren Löslichkeit der Zinnbronzeschicht wird diesem Bad vorzugsweise etwas Salzsäure
zugesetzt. Ein geeigneter Ansatz eines derartigen Bades
enthält 50g $FeCl_3$ x 6 $H_2O$, 25ml HCl (25 %), 1 l $H_2O$.

Da das Eisen-III-Chloridbad die Zwischenschicht 9 aus
edlem Metall, nämlich Gold oder Platin oder ein anderes
Edelmetall, nicht angreifen kann, wird ausschließlich die
Kupferschicht weggeätzt. Das aufgezeichnete Informationssignal tritt daher in der Goldschicht ohne irgendeine mechanische Beschädigung oder Formveränderung hervor. Die
Kupferschicht wird durch das Eisen-III-Chloridbad völlig
entfernt.

Durch diese Maßnahme ergibt sich eine vollkommene Abformung
der Kupferschicht 8 in der Goldzwischenschicht 9. Diese kann
dann zusammen mit dem Nickelträger 10 als Vater-Matrize zur
weiteren Vervielfältigung oder auch direkt als Preßmatrize
verwendet werden.

Das Einprägen oder Einschneiden des Informationssignals in
die Kupferschicht 8 ermöglicht eine hochgradige Genauigkeit.

Dies bedeutet andererseits, daß in dem verwendeten Auflösungsbereich die Aufzeichnungssicherheit sehr hoch ist, so daß der
Ausschuß sehr klein gehalten werden kann.

Das unmittelbare Aufzeichnen des Informationssignals mit
mechanischen Mitteln erlaubt es gleichzeitig, bereits während
der Aufzeichnung eine Signalkontrolle vorzunehmen, z. B. mit
Hilfe eines Laserstrahls, so daß sofort erkannt werden kann,
ob irgendwelche Fehler in der Aufzeichnung vorliegen. Zur
Prüfung ist also kein nachfolgender Entwicklungsprozeß erforderlich. Daraus ergibt sich bereits eine hohe Sicherheit
und Zeitersparnis zur Herstellung einer derartigen Matrize.

Der Aufzeichnungsvorgang benötigt im Gegensatz zur Laser-
Fotoresisttechnik keine Reinraumbedingungen. Die für das
angegebene Verfahren erforderlichen galvanischen Prozeßschritte sind ebenfalls unter den in der Schallplattentechnik
bisher üblichen Reinheitsbedingungen durchführbar.

Das Wegätzen der Schneidschicht von der Goldschicht bietet
den besonderen Vorteil, daß keine mechanische Trennung an der
Schneidschicht vorgenommen werden muß und daher Spannungsprobleme und Beschädigungen vermieden werden können, wie sie
bei der Matrizierung analoger Schallplatten auftreten können.

Die Trennschicht 7 weist gegenüber der Schneidschicht 8 eine
gute Haftung auf, so daß beim Abtrennen des Glasträgers von
der Matrize keine Rückstände auf dem Glasträger verbleiben.

Zur Durchführung des erfindungsgemäßen Prinzips können als
Informationsschicht grundsätzlich alle zum Einschneiden bzw.
Einprägen geeigneten Stoffe aus unedlem Metall verwendet
werden, auf die dann Schichten aus edlem Metall aufgalvanisiert werden. Das Abätzen des unedlen Metalls greift die
verbleibende Schicht aus edlem Metall nicht an.

Von besonderem Vorteil kann weiterhin angesehen werden, daß die bereits während der Aufzeichnung ermittelte Fehlerrate sich in der nachfolgenden Galvanisierung nicht mehr verändert und bis zur Ablösung der Informationsschicht von der Edelmetallschicht konstant bleibt, so daß sich eine äußerst unempfindliche Zwischenstufe der Matrizierung ergibt, die besonders geeignet ist zum Transport oder zur Lagerung einer Matrize, bevor davon Vervielfältigungen gezogen werden.

- 10 -                              0233138

<u>Bezugszeichenliste:</u>


 1        Glasträger
 2        Haftschicht
 3        Fotoresistschicht
 4        Silberschicht
 5        Nickelträger
 6        Glasträger
 7        Trennschicht
 8        Informationsträgerschicht
 9        Zwischenschicht
10        Aufzeichnungsträger

0233138

Anmelder:

Teldec Schallplatten GmbH
Heussweg 25
2000 Hamburg 20

Ansprüche:

1. Verfahren zur Herstellung einer bespielten plattenförmigen Matrize, bei dem das Informationssignal auf
einer metallischen Informationsschicht (8) aufgezeichnet wird, gekennzeichnet durch die Verfahrensschritte

   a) auf einen Glasträger (6) wird eine aus Metall bestehende
   Informationsträgerschicht (8) aufgedampft,

   b) das Informationssignal wird mit Hilfe eines Schneid-
   oder Prägestichels auf der Oberfläche der Informationsträgerschicht (8) aufgezeichnet,

   c) auf die Informationsträgerschicht (8) wird eine metallische Zwischenschicht (9) aufgalvanisiert, die in ihrer
   chemischen Zusammensetzung von der Informationsträgerschicht abweicht,

   d) auf die Zwischenschicht (9) wird eine metallische
   Trägerschicht (10) aufgalvanisiert,

   e) der aus Informationsträgerschicht (8), Zwischenschicht (9) und Trägerschicht (10) gebildete Sandwich
   wird vom Glasträger (6) mechanisch getrennt und

   f) die Informationsträgerschicht (8) wird durch ein die
   Zwischenschicht (9) nicht angreifendes Medium chemisch
   aufgelöst.

2. Verfahren nach Anspruch 1, dadurch gekennzeichnet, daß der
Glasträger (6) vor dem Aufdampfen der Informationsträgerschicht (8) mit einer Trennschicht (7) versehen wird.

3.  Verfahren nach Anspruch 2, <u>dadurch gekennzeichnet</u>,
    daß die Trennschicht (7) aus Metall besteht und daß
    die Trennschicht nach Trennung des Sandwiches (8, 9, 10)
    vom Glasträger (6) chemisch aufgelöst wird.

4.  Verfahren nach Anspruch 1, <u>dadurch gekennzeichnet</u>,
    daß die Zwischenschicht (9) aus Edelmetall besteht.

5.  Verfahren nach Anspruch 4, <u>dadurch gekennzeichnet</u>, daß
    die Zwischenschicht (9) aus Gold, Rodium oder Platin
    oder einer Edelmetall-Legierung besteht.

6.  Verfahren nach Anspruch 1, <u>dadurch gekennzeichnet</u>, daß
    die Informationsträgerschicht (8) aus Kupfer oder einer
    Kupferlegierung besteht.

7.  Verfahren nach Anspruch 1, <u>dadurch gekennzeichnet</u>, daß
    die Trägerschicht (10) aus Nickel besteht.

8.  Verfahren nach Anspruch 3, <u>dadurch gekennzeichnet</u>, daß
    die Trennschicht (7) aus aufgedampfter Zinnbronze besteht.

9.  Verfahren nach Anspruch 3, <u>dadurch gekennzeichnet</u>, daß
    die Informationsträgerschicht (8) und die Trennschicht
    (7) zusammen in dem gleichen chemischen Medium aufgelöst
    und dadurch entfernt werden.

10. Verfahren nach Anspruch 9, <u>dadurch gekennzeichnet</u>, daß
    das chemische Medium ein Eisen-III-Chloridbad mit einem
    Zusatz von Salzsäure ist.

11. Verfahren nach Anspruch 1, <u>dadurch gekennzeichnet</u>, daß
    das Informationssignal in Form einer Folge von Vertiefungen mit veränderlicher Länge und Abstand, aber im wesentlichen gleichbleibender Tiefe und Breite aufgezeichnet
    wird.

12. Bespielte plattenförmige Matrize, bei der das Informationssignal durch Prägen oder Schneiden auf einer metallischen Informationsträgerschicht aufgezeichnet ist, dadurch gekennzeichnet, daß auf die Oberfläche der Informationsträgerschicht (8) eine Metallzwischenschicht (9), deren chemische Zusammensetzung von der der Informationsträgerschicht (8) abweicht, und darauf eine metalische Trägerschicht (10) aufgalvanisiert sind.

13. Bespielte plattenförmige Matrize nach Anspruch 12, dadurch gekennzeichnet, daß die Informationsträgerschicht (8) aus Kupfer und die Zwischenschicht (9) aus einem Edelmetall besteht.

14. Bespielte plattenförmige Matrize nach Anspruch 13, dadurch gekennzeichnet, daß die Zwischenschicht (9) aus Gold oder Platin besteht.

15. Unbespielte plattenförmige Matrize, dadurch gekennzeichnet, daß auf einem Glasträger (6) eine Kupferschicht (8) aufgedampft ist.

16. Unbespielte plattenförmige Matrize nach Anspruch 15, dadurch gekennzeichnet, daß zwischen dem Glasträger (6) und der Kupferschicht (8) eine aus Zinnbronze bestehende Trennschicht (7) aufgedampft ist.

1/1 0233138

Figur 1

Figur 2

## Europäisches Patentamt

# EUROPÄISCHER RECHERCHENBERICHT

## 0233138
Nummer der Anmeldung

EP 87 73 0010

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 8, Nr. 165 (P-291)[1602], 31. Juli 1984; & JP-A-59 60 702 (TOSHIBA K.K.) 06-04-1984 * Insgesamt * | 1,4,5, 7,12-14 | G 11 B 3/68 G 11 B 23/00 |
| A | WIRELESS WORLD, Band 89, Nr. 1566, März 1983, Seite 60, Olchester, GB; "Mastering metals for mothers" * Insgesamt * | 1,6,12 ,13 | |
| A | PROCEEDINGS OF SPIE, Band 421, Arlington, Virginia, 8.-9. Juni 1983, Seiten 85-90, SPIE, US; R. IMANAKA et al.: "Optical disc memory system" * Seiten 85-87 * | 1,6,12 ,13 | |
| | | | RECHERCHIERTE SACHGEBIETE (Int. Cl.4) |
| A | DE-A-2 721 608 (R. BOSCH) * Seiten 15-21; Figur 1 * | 1-3,7, 9,12 | G 11 B |
| A | PATENT ABSTRACTS OF JAPAN, Band 7, Nr. 270 (P-240)[1415], 2. Dezember 1983; & JP-A-58 150 148 (TOKYO SHIBAURA DENKI K.K.) 06-09-1983 * Insgesamt * | 1,4,5, 7,12-14 | |

--- -/-

Der vorliegende Recherchenbericht wurde für alle Patentansprüche erstellt.

| Recherchenort DEN HAAG | Abschlußdatum der Recherche 24-04-1987 | Prüfer LEHNBERG C.R. |
|---|---|---|

**Europäisches Patentamt**

**EUROPÄISCHER RECHERCHENBERICHT**

0233138
Nummer der Anmeldung

EP 87 73 0010

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 8, Nr. 97 (P-272)[1534], 8. Mai 1984; & JP-A-59 8149 (MATSUSHITA DENKI SANGYO K.K.) 17-01-1984<br>* Insgesamt * | 1,3,7, 12 | |
| A | PATENT ABSTRACTS OF JAPAN, Band 2, Nr. 82, 30. Juni 1978, Seite 3413 E 78; & JP-A-53 46 004 (FUJI SHASHIN FILM K.K.) 25-04-1978<br>* Insgesamt * | 1,7,12 | |
| A | DE-A-2 137 888 (LICENTIA)<br>* Insgesamt * | 15 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 24-04-1987 | LEHNBERG C.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82